# EUROPEAN PATENT APPLICATION

(11) **EP 1 610 247 A1**
(43) Date of publication of application: **28.12.2005**
(21) Application number: 05006411.2
(22) Date of filing: 23.03.2005
(51) Int. Cl.: G06F 17/60

(54) **Customer information management system**

(30) Priority: 24.06.2004 JP 2004185795
(71) Applicant: Hitachi, Ltd., Tokyo (JP)
(72) Inventor: Sukeda, Hiroko Hitachi, Ltd. IPG, Chiyoda-ku Tokyo 100-8220 (JP); Horii, Youichi Hitachi, Ltd. IPG, Chiyoda-ku Tokyo 100-8220 (JP)
(74) Representative: Beetz & Partner

(57) **Abstract**

A point service - customer management system for conducting one-to-one promotion suitable for customer information analysis results such as customer histories and good customer degree and for customer preference, relative to each individual customer, without storing customer personal information in a server (300) on a company side, wherein a terminal (100) is provided to which only the promotion information matching customer conditions is presented from a shop to a customer by extracting it from promotion information generated in accordance with customer information analysis results such as a point value and a customer rank changing with a customer shopping from time to time, and a program is provided which runs on the terminal for receiving such promotion information.

## Description

### BACKGROUND OF THE INVENTION

### Field of the Invention

The present invention relates to a customer information management system and a point service system (FSP: Frequent Shoppers Program) for retail traders, and more particularly to a point management method of managing points by using portable terminals and managing and analyzing customer information, and to a portable terminal.

### Description of the Related Art

A point service system (hereinafter called point service) is generally used to attract customers, in which a point is added in accordance with a customer shopping history, and predetermined services are provided for accumulated points. For example, there are stamp cards used at shopping malls, frequent shoppers program at department stores or the like, a mileage program by air line companies and the like. With these services, customers are provided with incentives in the form of points, whereas enterprises collect customer information and aim at sales promotion and attracting customer. In general point service, customer data is collectively managed in a server, including basic information such as customer names, addresses and telephone numbers, customer preferences, purchase histories. In accordance with such information, sales promotion for individual customers is generally performed (one-to-one promotion). Market strategic planning and promotion are performed by collecting and analyzing customer information. This process is called CRM (Customer Relationship Management). Many such CRM tools are introduced to retail traders.

Point services have been proposed which use mobile phones, now commonly prevailing media, as customer identification devices. As an example of point services using mobile phones, services are known in which a server manages customer personal information and point information registered beforehand and point information is displayed upon login to a server from a mobile phone or upon reception of a mail (for example, refer to JP-A-2002-163537).

As the technologies of point management using mobile phones, in one technology a customer identifier and a point management module are fabricated in an IC card (IC chip) to be inserted in a mobile phone (for example, refer to JP-A-2002-15196), in another technology a customer ID is authenticated by reading at a shop the customer information displayed on a mobile phone screen in a two-dimensional bar code, and a customer point is added and stored in a point card storage unit in the mobile phone (for example, refer to JP-A-2002-109039).

In still another technology, latest analysis results can be obtained readily by analyzing customer information from minimum data (for example, refer to JP-A-2003-132431), and in still another technology, enciphered purchase data is input to a portable terminal such as a mobile phone allowing the customer information to be analyzed within the portable terminal off-line/real-time (for example, refer to US 2004/0249758A1.)

In many conventional point services, customer information is collectively managed on a server side. Companies send direct mails and transmit emails to customers to promote them to come to the shops, in accordance with analysis results of customer information such as good customer rank reflecting purchase histories of individual costumers, and other data. To this end, in many cases, customers are required to disclose personal information such as names, telephone numbers and mail addresses when membership is registered (upon participation). A server at a company knows all information on who purchased what goods at which shop. This brings some resistance to customers from the viewpoint of privacy protection.

From the standpoint of companies, recently many cases of leakage of customer information from companies issue a social problem. Since the personal information protection law is enforced, strict management of customer information is necessary. The background of the social problem resides in a high risk caused by collecting customer personal information. It is therefore desired that customer personal information is not collected too much, and promotion proper to individual customers is performed to promote the customers to come to shops or purchase goods.

### SUMMARY OF THE INVENTION

It is an object of the present invention to provide a point service / customer management system capable of performing one-to-one promotion to individual customer in accordance with analysis results of customer information such as histories and customer rank, and customer preferences, without a necessity of storing customer personal information in a server on a company side.

In order to solve the above-described issues, the present invention provides a terminal or a program on the terminal, in which in accordance with analysis results of customer information such as a point value and a customer rank changing from time to time according to customer shopping, promotion information only meeting the customer conditions is extracted from the promotion information supplied from a shop to customers, and presented to the customer.

For example, the terminal is a portable terminal such as a mobile phone possessed by a customer. Customer information analysis calculation is executed in the terminal by using purchase data stored in the terminal, and in accordance with the analysis results, proper promotion information is extracted and presented to the customer. In this case, the promotion information before extraction may be stored in the terminal or may be supplied from an external upon a request from the terminal.

Another configuration may be used in which a server on a shop side executes all of purchase data input, customer information analysis and promotion information extraction. Also in this case, since a reception request for the extracted promotion information is issued from a portable terminal possessed by each customer, the server side is not required to store customer identification information such as mail addresses, residences and telephone numbers for customer access.

The present invention provides the point service / customer management system capable of performing one-to-one promotion to individual customer in accordance with customer analysis results of customer information such as histories and customer rank information, and customer preferences, without a necessity of storing customer personal information in a server on a company side, and promoting customers to come to shops and purchase goods.

Other objects, features and advantages of the invention will become apparent from the following description of the embodiments of the invention taken in conjunction with the accompanying drawings.

### BRIEF DESCRIPTION OF THE DRAWINGS

Fig. 1 is a diagram showing the configuration of a system according to a first embodiment.
Fig. 2 is a diagram showing the structure of a portable terminal according to the first embodiment.
Fig. 3 is a diagram showing the structure of a shop terminal according to the first embodiment.
Fig. 4 is a flow chart illustrating an operation to be executed when a member participates according to the first embodiment.
Fig. 5 is a flow chart illustrating an operation to be executed for purchase at a shop according to the first embodiment.
Fig. 6 is a flow chart illustrating an operation to be executed when a customer does not come to a shop according to the first embodiment.
Fig. 7 is a diagram showing the configuration of a system according to a second embodiment.
Fig. 8 is a diagram showing the structure of a portable terminal according to the second embodiment.
Fig. 9 is a diagram showing the structure of a shop terminal according to the second embodiment.
Fig. 10 is a diagram showing the structure of a center server according to the second embodiment.
Fig. 11 is a flow chart illustrating an operation to be executed when a member participates according to the second embodiment.
Fig. 12 is a flow chart illustrating an operation to be executed for purchase at a shop according to the second embodiment.
Fig. 13 is a flow chart illustrating an operation to be executed when a customer does not come to a shop according to the second embodiment.
Fig. 14 is a diagram showing the configuration of a system according to a third embodiment.
Fig. 15 is a diagram showing the structure of a portable terminal according to the third embodiment.
Fig. 16 is a diagram showing the structure of a shop terminal according to the third embodiment.
Fig. 17 is a diagram showing the structure of a center server according to the third embodiment.
Fig. 18 is a flow chart illustrating an operation to be executed when a member participates according to the third embodiment.
Fig. 19 is a flow chart illustrating an operation to be executed for purchase at a shop according to the third embodiment.
Fig. 20 is a flow chart illustrating an operation to be executed when a customer does not come to a shop according to the third embodiment.
Fig. 21 is a diagram showing the configuration of a system according to a fourth embodiment.
Fig. 22 is a diagram showing the structure of a center server according to the fourth embodiment.
Fig. 23 is a flow chart illustrating an operation to be executed when a member participates according to the fourth embodiment.
Fig. 24 is a flow chart illustrating an operation to be executed for purchase at a shop according to the fourth embodiment.
Fig. 25 is a flow chart illustrating an operation to be executed when a customer does not come to a shop according to the fourth embodiment.
Fig. 26 shows a display example of the screen of a portable terminal.
Fig. 27 shows another display example of the screen of a portable terminal.

### DESCRIPTION OF THE EMBODIMENTS

### 1. First Embodiment

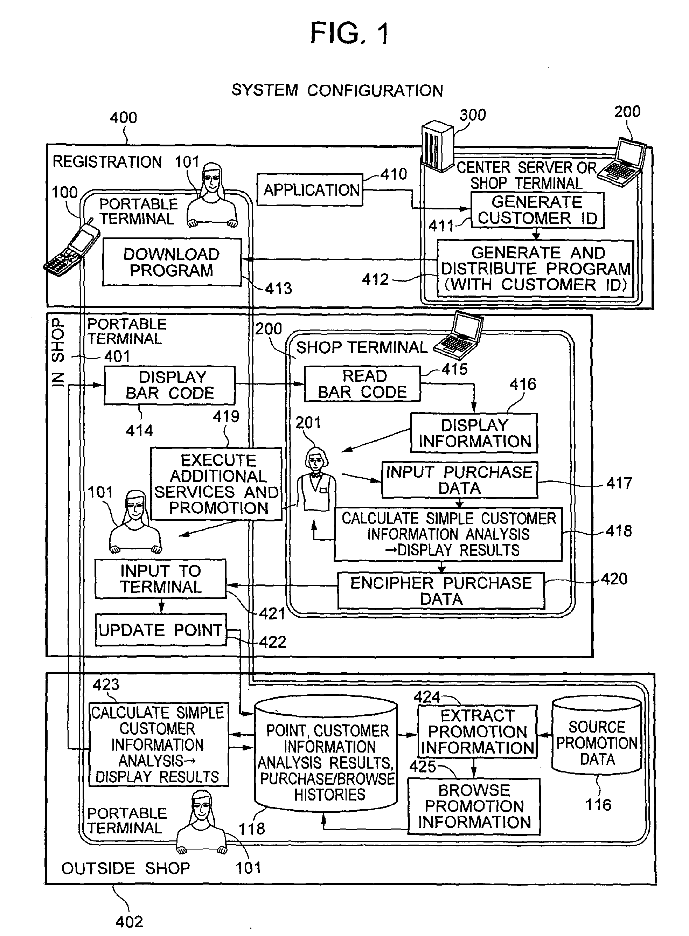

In the following, with reference to Figs. 1 to 6, description will be made on the first embodiment of a system realized by the present invention. Fig. 1 is a diagram showing the configuration of a system of the first embodiment realized by the present invention. A portable terminal 100 to be carried around by a customer is used for browsing promotion information and the like. A shop terminal 200 installed at each shop is used for inputting/outputting purchase data and the like. A server 300 is used for issuing a point management program or the like. When a customer registers as a frequent shoppers program member (400), an application (410) from the customer is sent to the center server 300 or shop terminal 200, and a point management program for a portable terminal is issued (412) and downloaded to the portable terminal of the customer (413). In this case, a customer ID unique to each terminal may be issued (411) and entered in a portable terminal program (412) in order to prevent unauthorized data input during purchase data enciphering to be described later (419). In this system, however, the customer ID is not necessarily required. As with a conventional member registration, the name, mail address and the like of a customer are not required to be disclosed and registered. In this embodiment, information such as the name, residence, mail address and telephone number which can be used for identifying an individual, being general information used by systems other than the embodiment system, is called personal information. The customer ID issued for this system and used only in the system is discriminated from the personal information.

When a customer 101 enters a shop (401), the customer activates the point management program in the portable terminal 100 to display a bar code on the screen (414). The "bar code" is intended to mean not only a one-dimensional bar code but also a multi-dimensional code such as a two-dimensional code capable of containing a larger amount of information. The bar code is generated in the portable terminal, containing information such as the customer ID, a current point value, the customer analysis results from the previous shopping time. A clerk 201 reads (415) the bar code with the shop terminal 200. The shop terminal analyzes the bar code and displays (416) the customer point value, analysis results and the like. The clerk can know the present customer point value and analysis results.

Next, as the clerk inputs present purchase data (417), a simple customer information analysis is executed, for example, by the method disclosed in JP-A-2003-132431, and the results are displayed (418). Although the customer information analysis same as the usual analysis may.be executed, it can be considered that the simple customer information analysis capable of being executed simply even by the shop terminal is sufficient, because detailed information is not necessary for additional services and promotion in the shop. The clerk can grasp the summary of the shopping tendency of the customer from the obtained information, and by utilizing this information, additional services and promotion are executed (419). The input purchase data is enciphered (420) and input to the portable terminal (421). The method of inputting the enciphered purchase data may be a method of printing an already enciphered character string on a receipt and manually input it to a portable terminal, a method of making a portable terminal recognize enciphered purchase data displayed in the bar code format, a method of transmitting enciphered purchase data to a portable terminal via infrared communications or the like, or other method. It is therefore not necessary that the shop terminal side stores personal information such as an address of a portable terminal in order to access the portable terminal. The purchase data input method is not limited only to those described above. As the purchase information is input, the point value in the portable terminal is renewed (422). In the case that purchase information is printed on a receipt or the like and manually input to the portable terminal, the customer ID read at (415) to encipher the purchase information (420) may be entered in order to prevent inappropriate input of purchase information of another customer.

When the customer 101 does not come to the shop (402) and activates the point management program of the portable terminal 100 to execute the simple customer information analysis by the method disclosed in JP-A-2003-132431 by using history data 118 such as the point data, previously calculated analysis results, and purchase histories, the latest analysis results are displayed (423) and the history data 118 is updated. The point management program stores beforehand source promotion data 116 defining the promotion conditions and contents. By using the source promotion data and in accordance with the history data 118 such as the point value and customer information analysis results, promotion information matching the present customer is extracted (424). The customer browses (425) the extracted promotion information, and the browse histories are stored in the program as the history data 118.

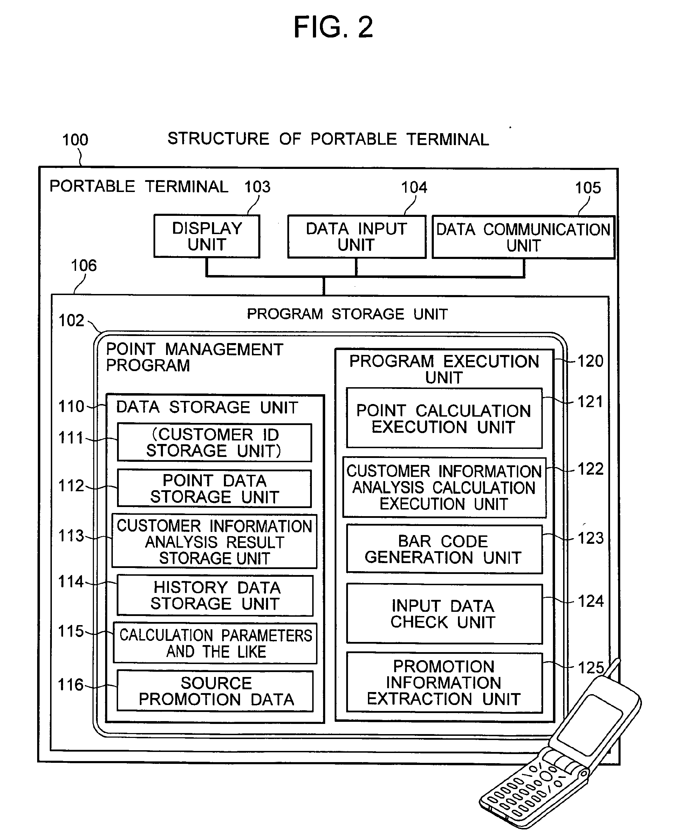

Fig. 2 is a diagram showing the structure of the portable terminal 100 of the first embodiment of the system realized by the present invention. The portable terminal has a display unit 103, a data input unit 104, a data communication unit 105 and a program storage unit 106. A point management program 102 is downloaded and stored in the program storage unit. The point management program has a data storage part 110 and a program execution part 120. The data storage part stores therein point data 112, customer information analysis results 113, history data 114 such as purchase histories and promotion information browse histories, calculation parameters and the like 115 for simple customer information analysis, and source promotion data 116. A customer ID 111 can be stored, although the customer ID being inessential. The program execution module includes a point calculation execution module 121, a custom information analysis calculation execution module 122, a bar code generation module 123, an input data check module 124 and a promotion information extraction module 125.

Point data, history data, promotion information and the like are displayed on the display unit 103. The display unit also displays a bar code if data transfer to and from the shop terminal is executed by using the bar code. The data input unit may be a keyboard, a camera used for reading a bar code or a voice input unit. The data communication unit performs communications through cellular communications, wireless LAN, Bluetooth, infrared or the like, and is used for transmission/reception of point data, purchase data, programs and the like to and from the shop terminal or server.

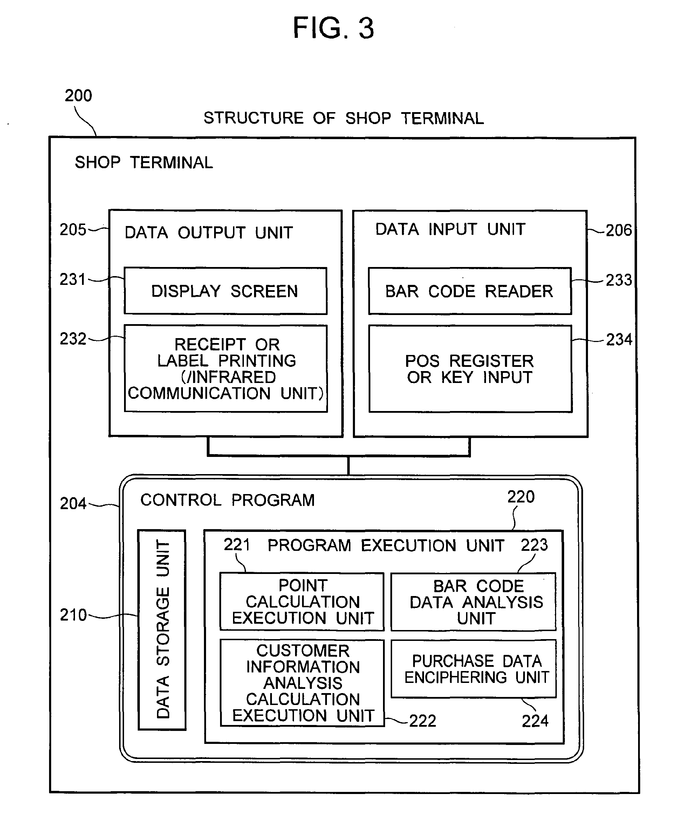

Fig. 3 is a diagram showing the structure of the shop terminal 200 of the first embodiment of the system realized by the present invention. The shop terminal includes at least a data input unit 206 having a display screen 231 and a receipt or label printing unit 232 (or infrared communication unit or the like), a data input unit 206 (which may be an infrared communication unit) having a bar code reader 233 and a POS register or input key 234, and a control program 204. The control program includes a data storage part 210 for storing parameters for analysis calculation and temporarily storing customer information and a program execution part 220. The program execution part includes a point calculation execution part 221, a customer information analysis calculation part 222, a bar code data analysis part 223 and a purchase data enciphering part 224.

The display screen 231 is used for displaying point data, history data, promotion information and the like of the terminal user.

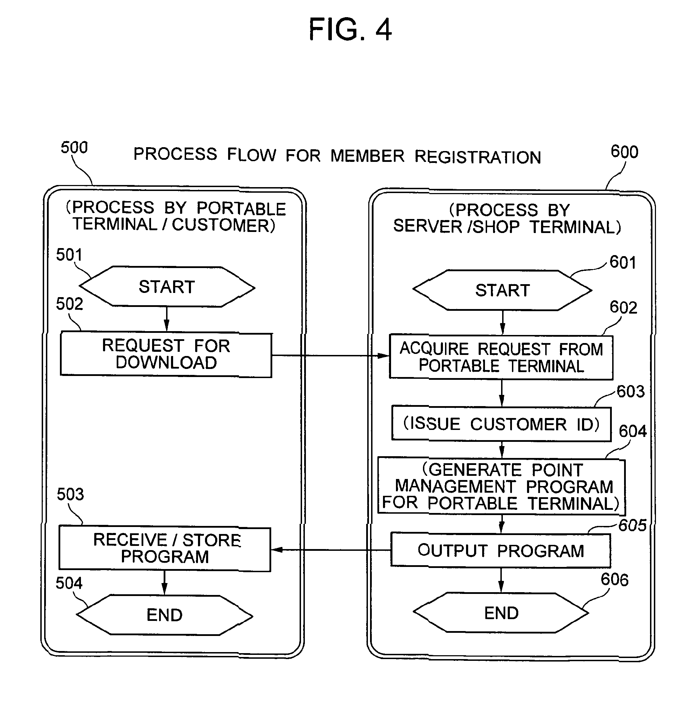

Next, with reference to Fig. 4, description will be made on the process flow to be executed when a member register for the system of the first embodiment realized by the present invention. The left part of Fig. 4 shows the process 500 to be executed by the portable terminal/costumer, and the right part shows the process 600 to be executed by the server or shop terminal. A portion of the process at the shop terminal may be executed by a server which collectively manages a plurality of shop terminals. Therefore, the process described in the following as the process by the shop terminal includes also the process by the server. When a download is requested from the portable terminal (502), the shop terminal acquires this request (602), generates if necessary a customer ID (603) and generates a point management program for a portable terminal including the customer ID if it exists (604). If the customer ID is not necessary, the point management program prepared beforehand is used. Thereafter, the program is transmitted from the shop terminal to the portable terminal (605), and the portable terminal receives the point management program (503). In this case, the customer is not required at all to disclose the information identifying the individual of the customer itself. Since the program reception trigger is issued from the portable terminal side (e.g., through Web access), the server is not required to know the address of the portable terminal in advance.

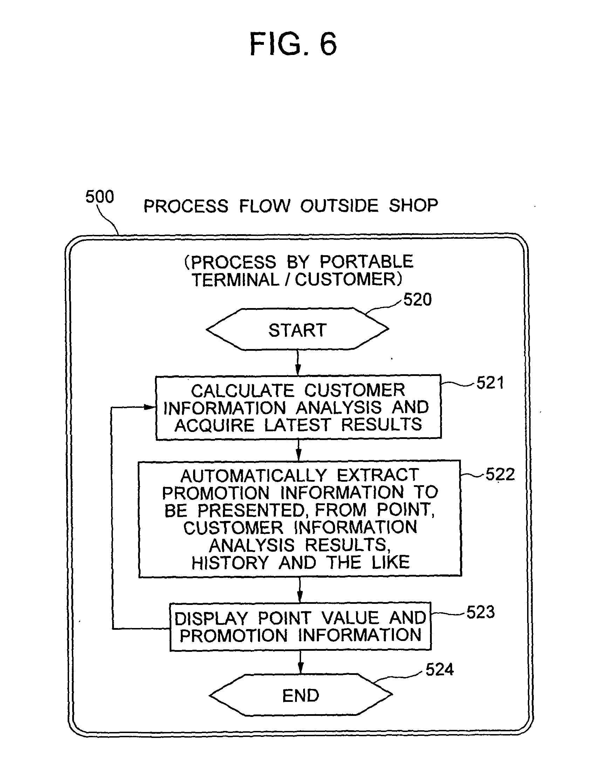

The source promotion data contains promotion information of a plurality of patterns. The promotion information of each pattern is assumed to be prepared in accordance with a different shopping tendency of each customer. The source promotion data may be transmitted from the shop terminal to the portable terminal, together with the point management program. The pattern of the promotion data to be presented to a user is selected by the process flow (Fig. 6) to be executed out of the shop. Therefore, the source promotion data downloaded herein is not required to be prepared in accordance with the user purchase history, good customer rank and the like.

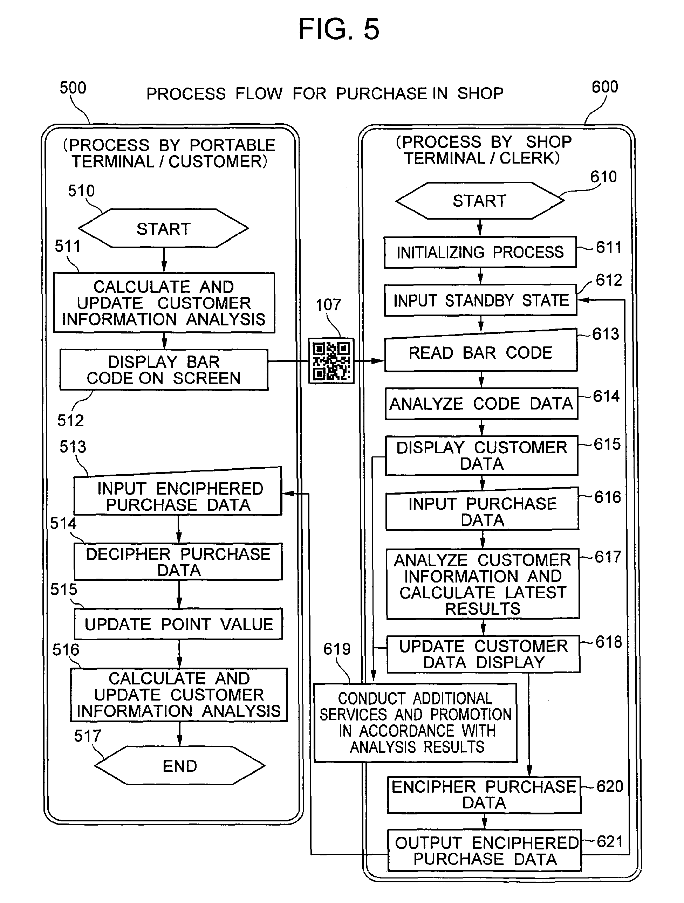

Next, with reference to Fig. 5, description will be made on the process flow to be executed for purchase in a shop of the system of the first embodiment realized by the present invention. The left part of Fig. 5 shows the process 500 to be executed by the portable terminal/costumer, and the right part shows the process 600 to be executed by the shop terminal. As the point management program of the portable terminal is activated in the shop, the latest customer information analysis results are calculated again (511) and a bar code is displayed on the screen (512). The bar code 107 is generated by the bar code generation part 123 in the portable terminal, containing information on the current point value 112, latest customer information analysis results 113 and the like. The shop terminal reads the bar code 613, analyzes the code data of the bar code, and obtains the point value and latest customer information analysis results (614). The obtained customer information is displayed on the screen (615). Exchange of the point data and the purchase data to be described hereinafter may be conducted by another method other than the bar code.

Next, as the clerk inputs purchase data (616), simple customer information analysis calculation is executed in the shop terminal (617) and the obtained results are displayed (618). In accordance with the displayed contents, the clerk can conduct additional services and promotion to the customer (619). The input purchase data is enciphered (620), and is output to the portable terminal (621). If the purchase data is enciphered in such a manner that it can be deciphered only by the portable terminal of the purchaser, it is possible to prevent the customer from inputting a larger purchase money amount to its portable terminal or inputting purchase information of the third party. Enciphering is not necessarily required if the purchase data is input by using a bar code camera or infrared communications. The portable terminal inputs the output enciphered purchase data through manual input of an enciphered character string, reading/recognizing a bar code, infrared communications or the like (512). The input purchase data is deciphered (513) to renew the point value (514), and the customer information is analyzed to display the analysis results (515).

In order not to input purchase data of the third party, additional information such as the customer ID may be used. In this case, the source promotion data as well as the purchase data may be transmitted to the portable terminal to renew the source promotion data stored in the portable terminal. Also in this case, similar to the process flow (Fig. 4) when the member is registered, the source promotion data to be downloaded is not required to be discriminated in accordance with a good customer rank or the like. However, the source promotion data discriminated to some degree in accordance with the user shopping tendency known to some degree from the history information and purchase data may be transmitted in order to reduce the amount of data to be downloaded in the shop.

Fig. 6 illustrates a process flow of the system of the first embodiment realized by the present invention, to be executed out of the shop. Since the customer information analysis results such as the prime customer rank stored in the portable terminal 100 change from time to time, the customer information analysis calculation is performed each time the program is activated to obtain the latest information, and the analysis results are renewed (521). The promotion data presented by the source promotion data 116 is automatically extracted in accordance with the latest point value 112, customer information analysis results 113 and history information 114 (522). The point value and promotion data are displayed on the screen 103 of the portable terminal (523).

The first embodiment of the system realized by the present invention has been described above. According to this system, even while away from the shop, the customer can receive additional services and promotion matching the purchase tendency in the shop, and can browse the promotion information extracted to suit the customer which could be a trigger for next going to the shop. Since the source promotion data can be downloaded in the shop or when the member is registered by accessing from a portable terminal, the company side is not required to access a user portable terminal. At the same time, only the promotion information matching a customer is presented, so it is possible to realize one-to-one promotion outside the shop even in off-line situation. Since this system does not require a center server and a customer database, leakage of customer information will not occur so that shops can adopt this system without the risks. Since a process of presenting promotion information is executed off-line, the customer is not required to communicate with a server and can receive promotion communication charges.

### 2. Second Embodiment

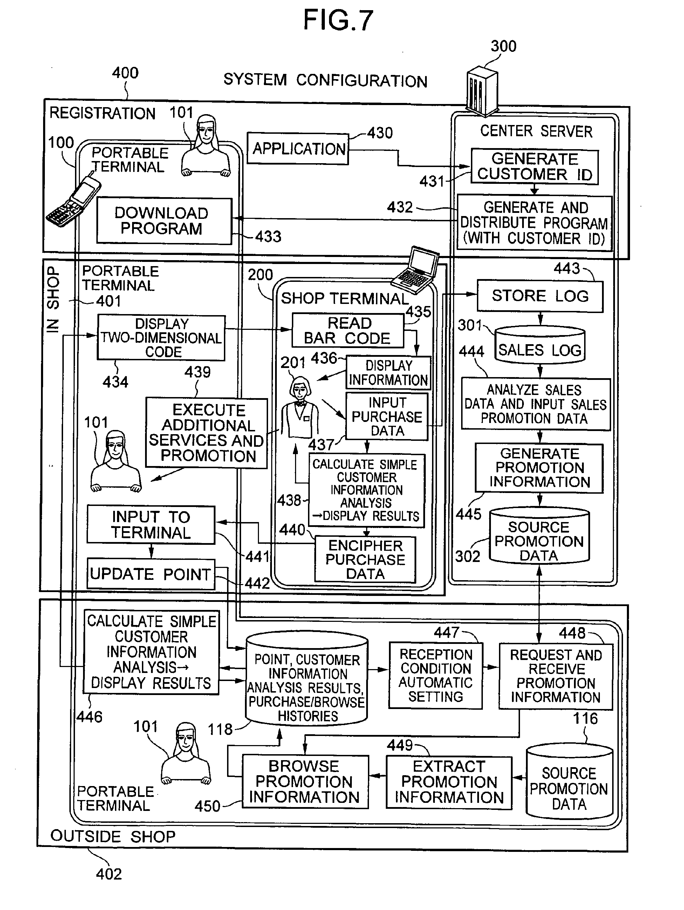

Next, with reference to Figs. 7 to 13, description will be made on a system of the second embodiment realized by the present invention.

Fig. 7 is the diagram showing the configuration of the system of the second embodiment realized by the present invention. When a member participates (400) and an application (430) from the customer reaches the center server 300, a point management program for a portable terminal is issued (432) and downloaded to a portable terminal of the customer (433). In this case, address information of the server which becomes necessary when promotion information is requested may also be downloaded and stored in the portable terminal. Similar to Fig. 1, a customer ID unique to each terminal may be issued (431) in order to prevent unauthorized data input during purchase data input. However, the customer ID is not necessarily required. Also in this embodiment, the name, mail address and the like of a customer are not required to be disclosed or stored for the member registration.

When a customer 101 enters a shop (401), the customer activates the point management program in the portable terminal 100 to display a bar code on the screen (434). A clerk 201 reads (435) the bar code with a shop terminal 200. The shop terminal analyzes the bar code and displays (436) information such as the customer point value, analysis results and the like. As the clerk inputs present purchase data (437), a simple customer information analysis is executed, and the results are displayed (438). In accordance with the displayed information, the clerk can conduct additional services and promotion (439). The input purchase data is enciphered and output (440) and input to the portable terminal (441) so that the point value in the portable terminal is renewed (442). The above-described process flow can be executed in a manner similar to the first embodiment. The input purchase data is transmitted to and stored in the server at a proper timing (443).

In the center server 300, the stored sales log 301 is analyzed to grasp a sales tendency of all customers as a group. In accordance with the sales tendency, sales promotion data such as sale information is input when necessary (444) to generate source promotion data with conditions 302 to be presented to customers (445). Here, it should be noted that customer personal information is not necessary when using the shopping tendency of whole purchase data.

When the customer 101 does not come to the shop (402) and activates the point management program of the portable terminal 100 to execute the simple customer information analysis by using history data 118 such as the point data, previously calculated analysis results, and purchase histories, the latest analysis results are displayed (446). In accordance with this information, the conditions of receiving the promotion information are automatically set (447). This information is compared with the source promotion data 302 stored in the server 300, to thereby receive only the promotion information matching the customer (448). Only the necessary promotion information may be extracted by checking the source promotion data 116 stored beforehand in the portable terminal (449).
Using the source promotion data 116 stored beforehand in the portable terminal is advantageous in that data does not need to be acquired each time through communications. The customer browses the extracted promotion information (450), and the browse histories are stored in the program.

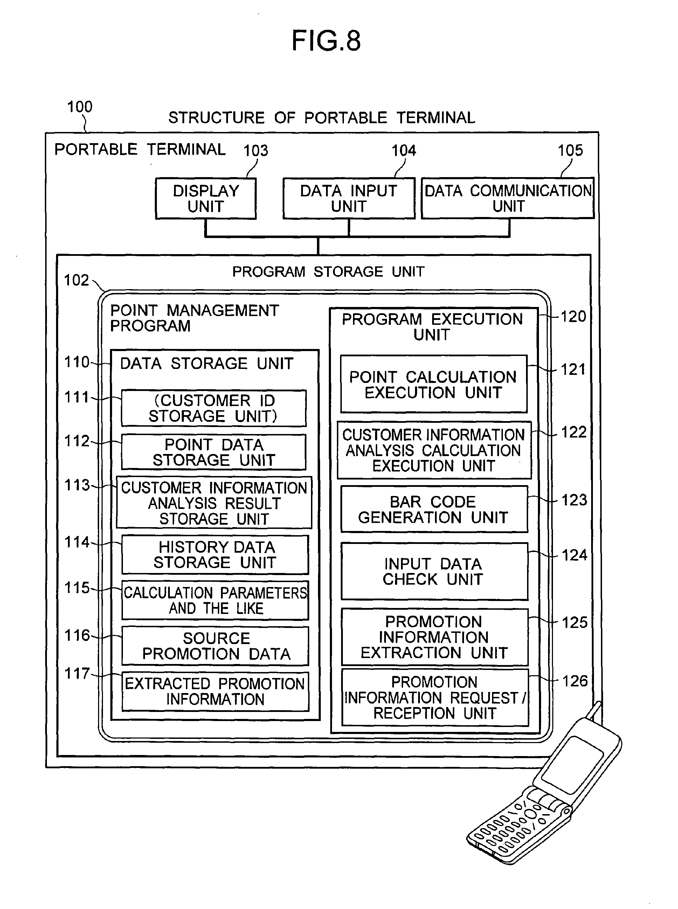

Fig. 8 is a diagram showing the structure of the portable terminal 100 of the second embodiment of the system realized by the present invention. The structure is similar to that shown in Fig. 2 excepting that the portable terminal has additionally a data reception unit 126 and a promotion information storage unit 117. When the promotion information is requested, information necessary for the server to extract the promotion information is additionally transmitted, including the latest point value 112, customer information analysis results 113 and history information 114. The stored promotion information 117 is displayed on the display unit 103.

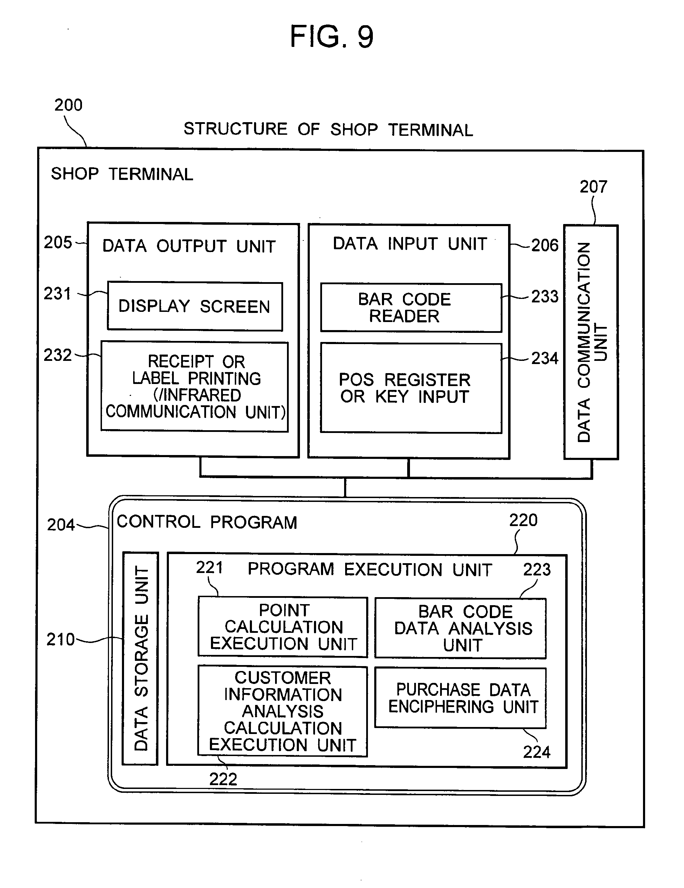

Fig. 9 is a diagram showing the structure of the shop terminal 200 of the second embodiment of the system realized by the present invention. The structure is similar to that shown in Fig. 3, excepting that the shop terminal has additionally a data communication unit 207 for data communication with the server, such as purchase data transmission.

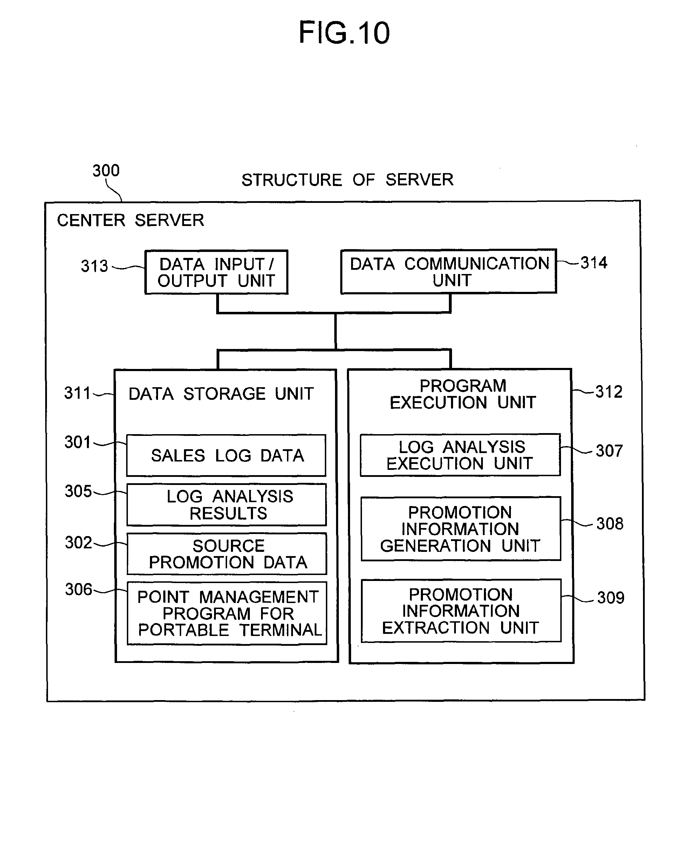

Fig. 10 is a diagram showing the structure of the center server 300 of the second embodiment of the system realized by the present invention. The center server 300 has: a data input/output unit 313 having an input unit such as a keyboard and a mouse for an operator and an output unit such as a display unit; a data communication unit 314 for communicating with the portable terminal 100 and shop terminal 200 via a network; a data storage unit 311; and a program execution unit 312. The data storage unit stores sales log data 301, log analysis results 305, source promotion data 302 including promotion information of a plurality of patterns, a point management program 306 for downloading data to the portable terminal, and the like. The program execution part includes: a log analysis execution part 307; a promotion information generation part 308 for generating the source promotion data 302; and a promotion information extraction part 309 for extracting the promotion information matching the extraction conditions transmitted from the portable terminal, from the stored source promotion data 302.

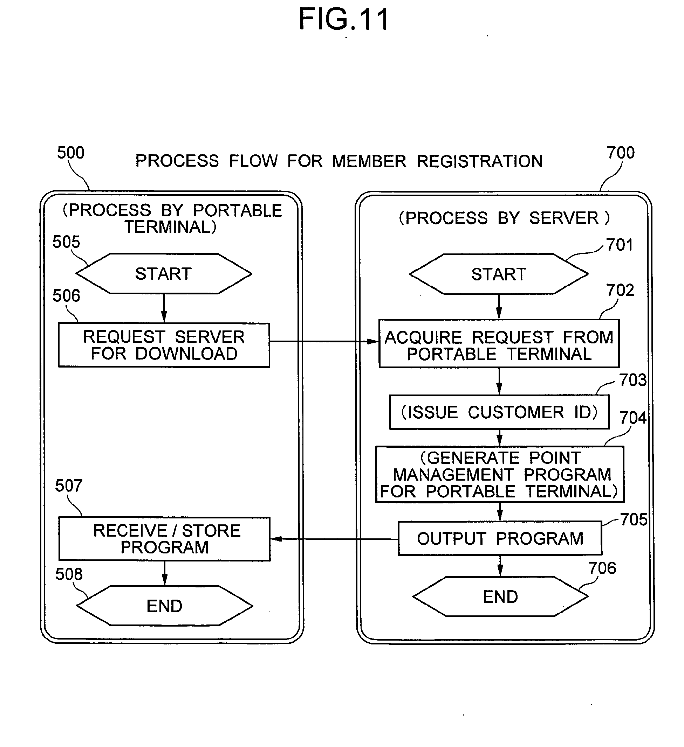

Fig. 11 illustrates the process flow to be executed when a member registers for the system of the second embodiment realized by the present invention. The process flow is similar to that shown in Fig. 4 and the description thereof is omitted. The important point is that the center server of the system does not need to have a customer database for storing customer personal information.

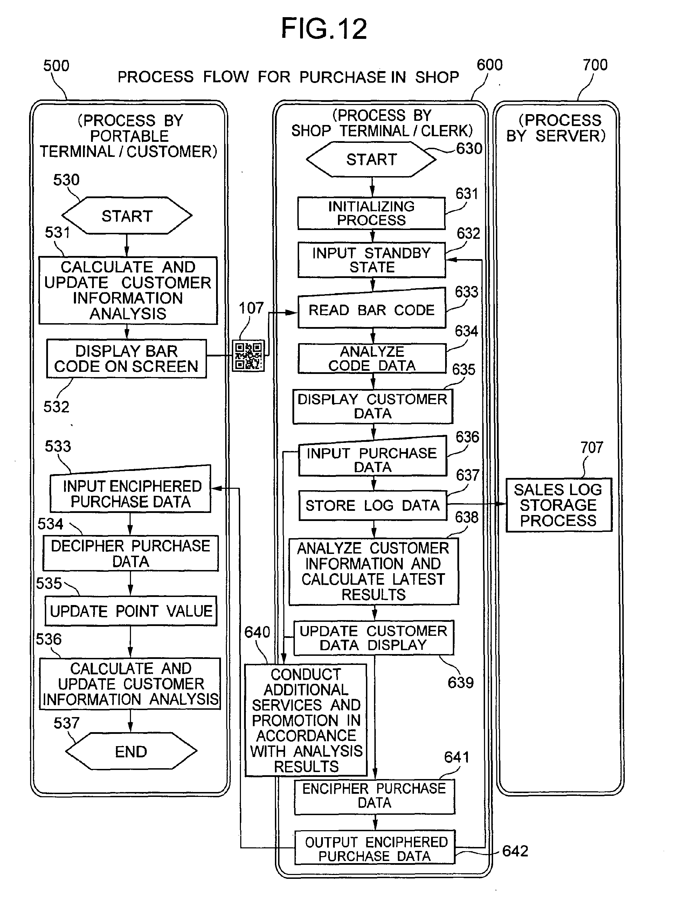

Fig. 12 illustrates the process flow to be executed for purchase in a shop in the system of the second embodiment realized by the present invention. The process flow is similar to that shown in Fig. 5. A main difference resides in the process 707 of storing a sales log collected by the shop terminal 200 in the server.

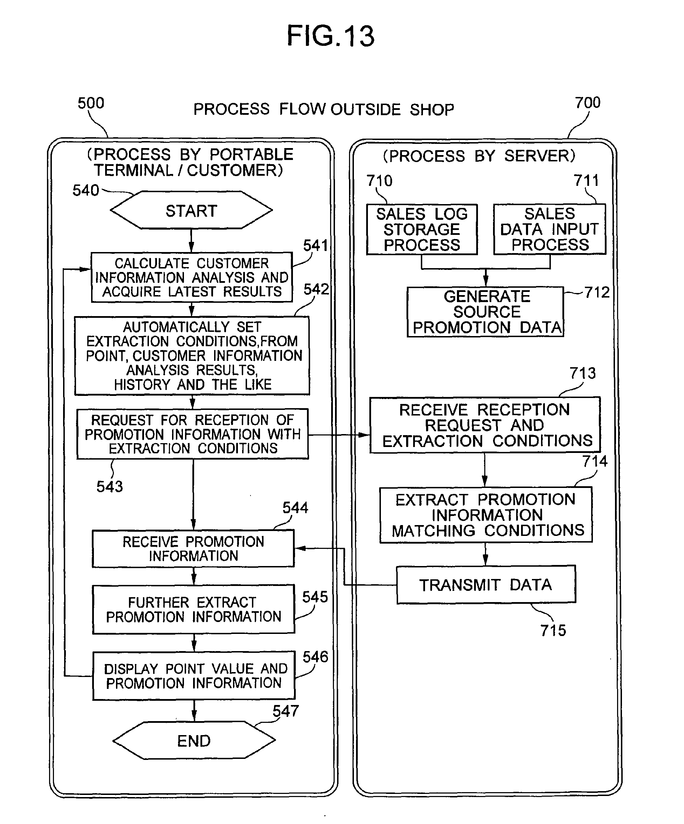

Fig. 13 illustrates the process flow to be executed out of a shop in the system of the second embodiment realized by the present invention. The process flow is similar to that shown in Fig. 5. The server 300 stores a sales log sent from the shop terminal 200 (710), and if necessary inputs sales data such as sales information (711). In accordance with these information, the source promotion data 302 is generated in the server (712).

As the program of the portable terminal 100 is activated, customer information analysis calculation is executed to obtain the latest results (541). The extraction conditions are set from the analysis results and the latest data such as the point value (542). By adding the extraction conditions and using address information of the server stored beforehand, the server is accessed to request the server for the reception of promotion information (543) (the customer information analysis and extraction condition setting may be executed on the server side by transmitting all or a portion of the history information.) Upon reception of the reception request and extraction conditions from the portable terminal (713), the server extracts the promotion information matching the conditions from the source promotion data (713) and transmits it to the portable terminal (715). The portable terminal receives this data (544) and presents the promotion information to the customer. By using also the source promotion data 116 stored in the portable terminal, the promotion information to be presented may be extracted (545) and presented to the customer (546). The promotion information is extracted by using the extraction conditions of the promotion information transmitted from the portable terminal to the server, and transmitted to the portable server. With this method, the promotion information suitable for each customer can be presented without a necessity that the server holds beforehand customer personal information such as a telephone number.

The second embodiment of the system realized by the present invention has been described above. According to this system, the customer can receive additional services and promotion matching the purchase tendency in the shop, and can browse the promotion information outside the shop. In this case, the customer can receive not only the source promotion data stored beforehand in the portable terminal but also the latest promotion information (sales information, new goods information and the like) stored in the server, to have more chances of going to the shop. Both shops and customers gain from many advantages because one-to-one promotion away from the shop can be realized without disclosing personal information.

### 3. Third Embodiment

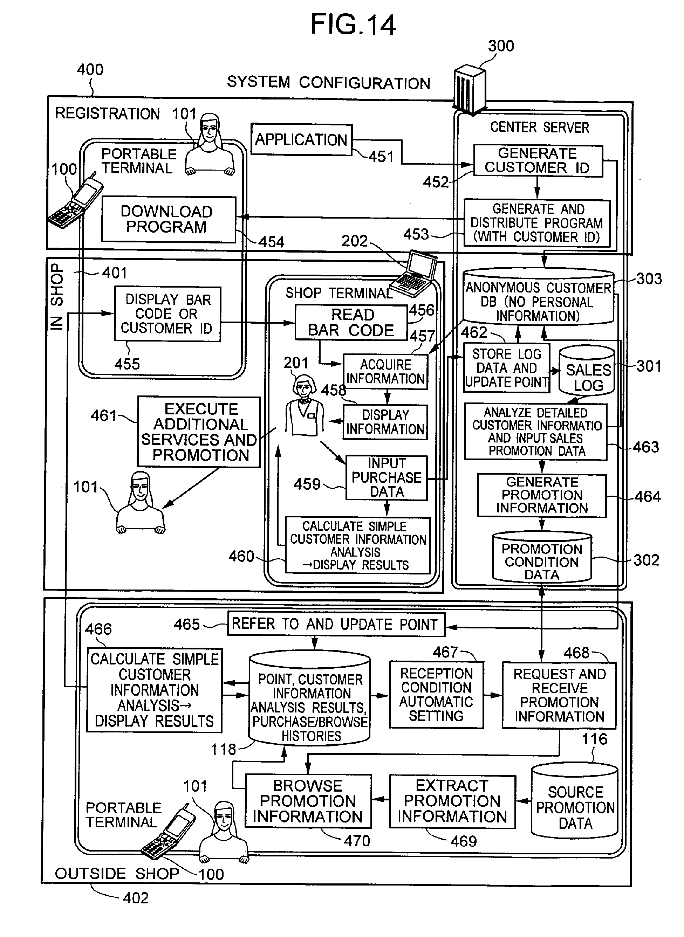

Next, with reference to Figs. 14 to 20, description will be made on a system of the third embodiment realized by the present invention. In the third embodiment, a customer ID is assigned to a portable terminal and a center server manages history data of each customer by using customer IDs.

Fig. 14 is the diagram showing the configuration of the system of the third embodiment realized by the present invention. When a member registers (400) and an application (451) from the customer reaches the center server 300, a customer ID unique to each portable terminal is issued (452) A point management program for a portable terminal assembled with the customer ID is generated and issued to the portable terminal (453) and downloaded in the customer portable terminal (454). In this case, address information which becomes necessary for requesting for the promotion information may also be downloaded. In this system, the customer ID is essential, and the server is provided with an anonymous customer database 303. Information for identifying individual customers such as names and mail addresses does not need to be stored in the customer database. A method of using the server address information is similar to that of the second embodiment.

When a customer 101 enters a shop (401), the customer either activates the point management program in the portable terminal 100 to display a bar code containing similar information to that shown in Figs. 1 and 7, or presents the customer ID (455). A clerk 201 reads (456) the bar code with a shop terminal 200. The shop terminal analyzes the bar code and displays (458) information such as the customer point value, customer analysis results and the like. Alternatively, the anonymous customer database 303 in the server 300 may be searched by using as a key the customer ID obtained from the screen displayed on the portable terminal, to acquire the latest point value, sales histories, customer analysis results and the like (457) and display the acquired information (458). As the clerk inputs present purchase data (459), a simple customer information analysis is executed, and the results are displayed (460). In this case, if the latest analysis results can be acquired immediately, the latest analysis results may be acquired from the server instead of executing analysis calculation in the shop terminal. In accordance with the displayed information, the clerk can conduct additional services and promotion (461). The input purchase data is transmitted to and stored in the server and the point value is renewed (462).

In the center server 300, the stored sales log 301 and the history data and the like stored in the anonymous customer database are analyzed to grasp a sales tendency of all customers as a group. In accordance with the sales tendency, sales promotion data such as sale information is input when necessary (463) to generate source promotion data with conditions 302 (464).

When the customer 101 does not come to the shop (402) and activates the point management program of the portable terminal 100 to access the anonymous customer database 303 of the server and acquire and update the latest point value corresponding to the customer ID (465), and to execute the simple customer information analysis by using history data 118 stored in the portable terminal, and the latest analysis results are displayed (466). In accordance with this information, the conditions of receiving the promotion information are set (467). This information is compared with the source promotion data 302 stored in the server, to thereby supply only the promotion information matching the customer (468). By the method similar to the first embodiment, the necessary promotion information may be extracted from the source promotion data 116 stored beforehand in the portable terminal (469). Using the source promotion data 116 stored beforehand in the portable terminal, is advantageous in that data does need to be acquired each time through communications. The customer browses the extracted promotion information (470), and the browse histories are stored in the program.

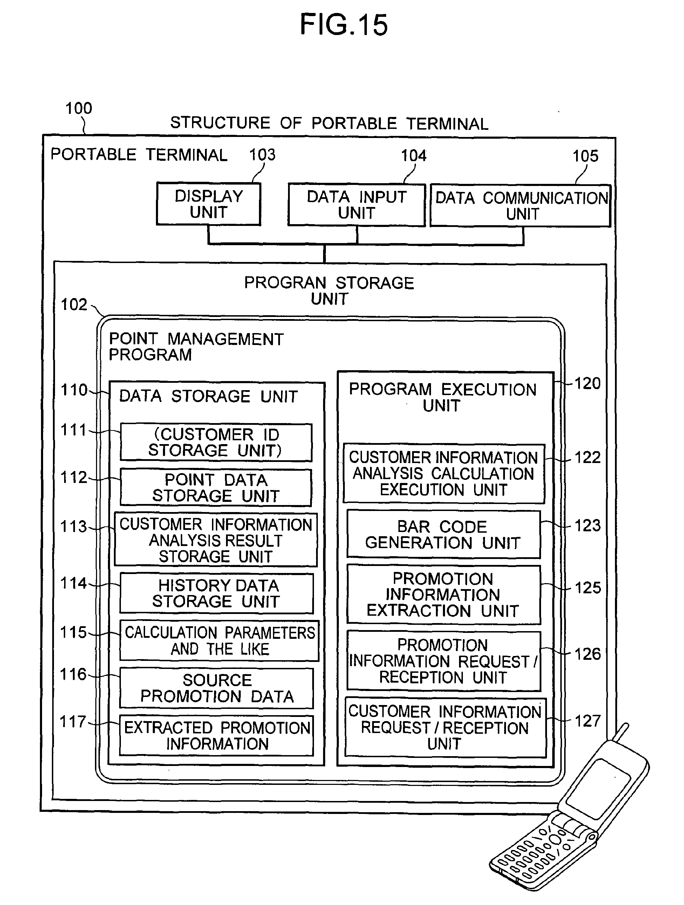

Fig. 15 is a diagram showing the structure of the portable terminal 100 of the third embodiment of the system realized by the present invention. The structure is similar to that shown in Fig. 8 excepting that the input data check part is not necessary because there is no process of inputting enciphered purchase data in the shop and that a customer information request/reception part 127 is provided for executing a process of receiving data such as the current point value and the like from the server.

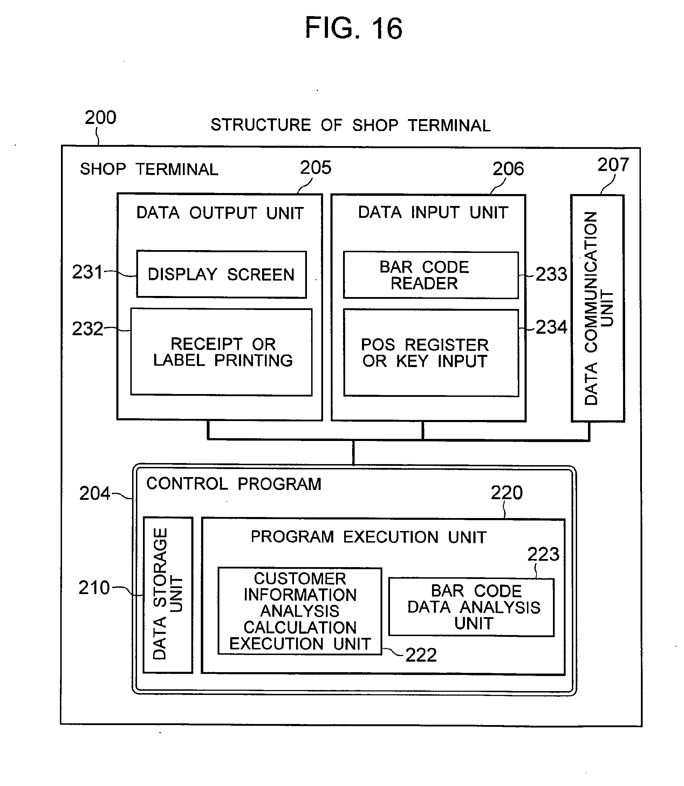

Fig. 16 is a diagram showing the structure of the shop terminal 200 of the third embodiment of the system realized by the present invention. The structure is similar to that shown in Fig. 9, excepting that the purchase data enciphering part and point calculation part are not necessary because it does not require the purchase data transmission from the shop terminal to the portable terminal. When the customer ID is acquired from the data input from the data input unit 206 and the purchase data is transmitted to the server from the data communication unit 207, the customer ID is additionally transmitted.

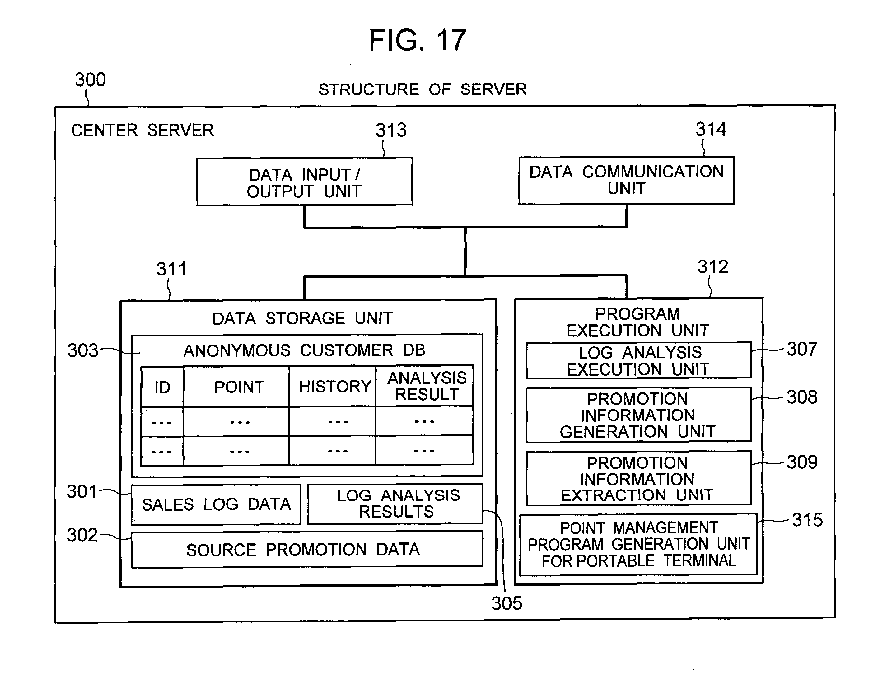

Fig. 17 is a diagram showing the structure of the center server 300 of the third embodiment of the system realized by.the present invention. The center server 300 has a data input/output unit 313, a data communication unit 314, a data storage unit 311 and a program execution unit 312. The data storage unit stores an anonymous customer database 303, sales log data 301, log analysis results 305, source promotion data 302 and the like. Although the anonymous customer database stores the customer ID, point value, history data, customer information analysis results, it does not store information that can be used for identifying the individual customer such as the name and mail address. The program execution unit includes a log analysis execution part 307, a promotion information generation part 308, a promotion information extraction part 309 and a point management program generation part 315 for a portable terminal assembled with the customer ID when a member participates.

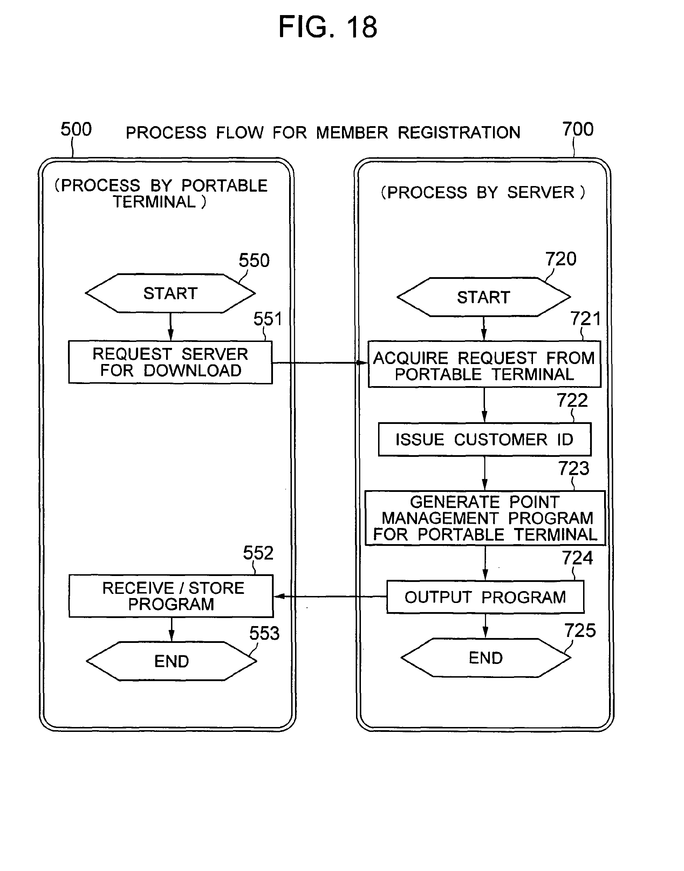

Fig. 18 illustrates the process flow to be executed when a member registers for the system of the third embodiment realized by the present invention. When a download request is issued from the portable terminal 100 (550), the server 300 acquires the request (721), issues the customer ID unique to each terminal (722), and generates a point management program for portable terminal assembled with the customer ID (723). As the program is sent to the portable terminal (724), the portable terminal downloads it (552) and stores the customer ID in a customer ID storage unit 111.

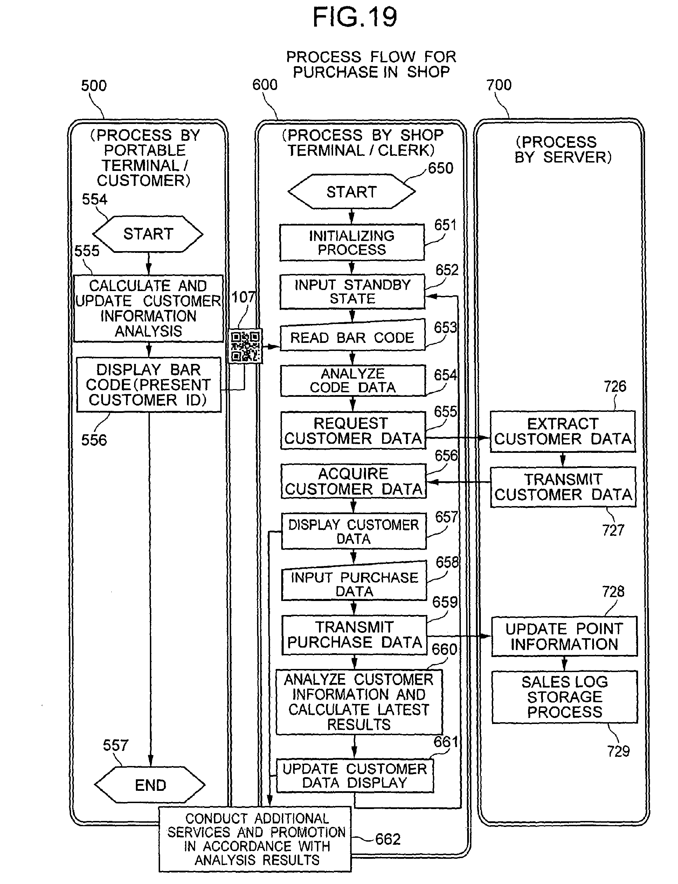

Fig. 19 illustrates the process flow to be executed for purchase in a shop in the system of the third embodiment realized by the present invention. As the point management program is activated at the shop, either the latest customer information analysis results are calculated again (555) to display a bar code on the screen or the customer ID is presented (556). The shop terminal reads the bar code (653), analyzes the code data (654) to acquire the point value and latest customer information analysis results or the customer ID. As the shop terminal requests the server for the reception of the customer data by using the customer ID as a key (655), the server extracts the necessary customer data from the anonymous customer database 303 (726) and transmits it to the shop terminal (727). The shop terminal receives the customer information (656) and displays it on the screen (657). As the clerk inputs purchase data (658), the purchase data together with the customer ID is sent to the server whereat the point information is renewed (728) and the sales log is stored (729). Simple customer information analysis calculation is executed in the shop terminal (659) and the obtained results are displayed (661), or the latest analysis results are acquired through communications with the server. The clerk can conduct additional services and promotion in accordance with the displayed contents (662).

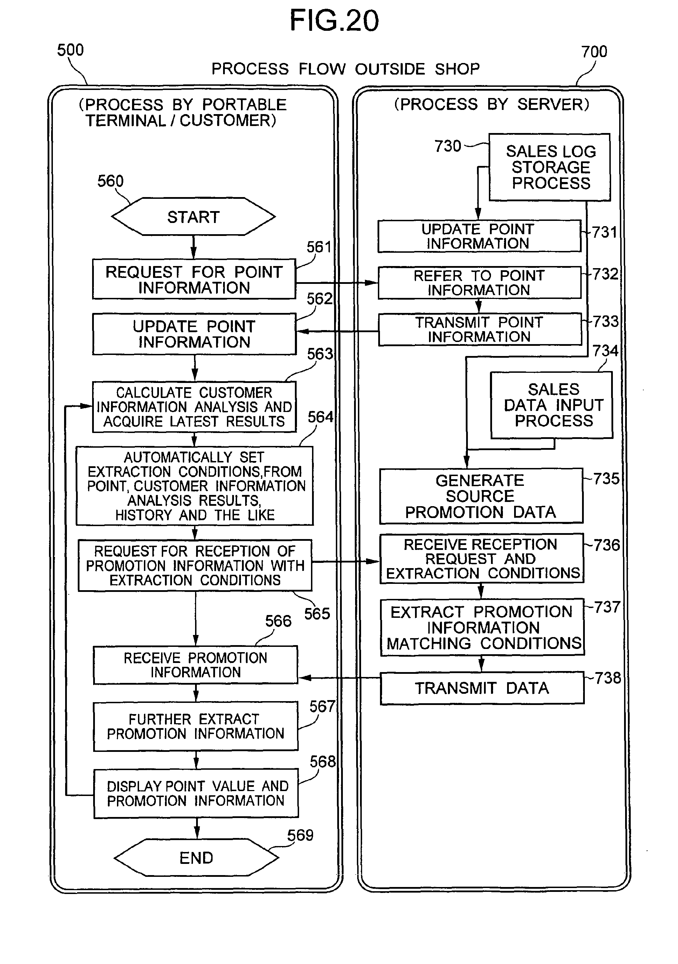

Fig. 20 illustrates the process flow to be executed when the customer is outside a shop in the system of the third embodiment realized by the present invention. The server 300 stores a sales log sent from the shop terminal 200 (730), and renews the point information in the anonymous customer database 303 (731). As the sales data such as sales information is input when necessary (734), the source promotion data 302 is updated (735). As the program of the portable terminal 100 is activated, the customer ID is transmitted to request the server for the point data (561), and the server refers to the latest point value (731) and transmits it (733). The portable terminal receives it (562) and execute customer information analysis calculation to acquire the latest analysis results (563). By storing information such as the latest point value, the latest information can be transmitted to the shop terminal when the customer enters the shop the next time.

Next, the extraction conditions are set in accordance with the analysis results and the latest data such as the point value (564), by additionally using the extraction conditions, and the portable terminal request the server for the reception of the promotion information (565). The server receives the reception request and extraction conditions from the portable terminal (736), extracts the promotion information matching the conditions from the source promotion data (737) and transmits it to the portable terminal (738). The portable terminal receives this data (566) to present the promotion information to the customer. By additionally using the source promotion data 116 stored in the portable terminal by the method similar to that of the first embodiment, the promotion information may be extracted (567) and presented to the customer (568). Alternatively, only the customer data may be stored in the portable terminal, and when the promotion information is requested, the customer ID is transmitted to the server to execute, on the server side, point calculation, setting the extraction conditions of the promotion information, extracting the promotion information and the like.

The third embodiment of the system realized by the present invention has been described above. According to this system, as compared to the first and second embodiments, since the latest point value is managed by the server, it is not necessary to input purchase data to the portable terminal. Although the purchase histories and the like of each customer are managed by the server, it is not necessary to disclose information for identifying an individual customer. If the promotion information is required, a check of the purchase history information stored in the server can be made by transmitting the customer ID from the portable terminal. Communications from the portable terminal out of the shop to the server can be reduced minimum and the customer feels comfortable. The company side can avoid the risk of leakage from holding customer personal information. Also in this system, it is possible to conduct the promotion in the shop, and also the one-to-one promotion outside the shop.

### 4. Fourth Embodiment

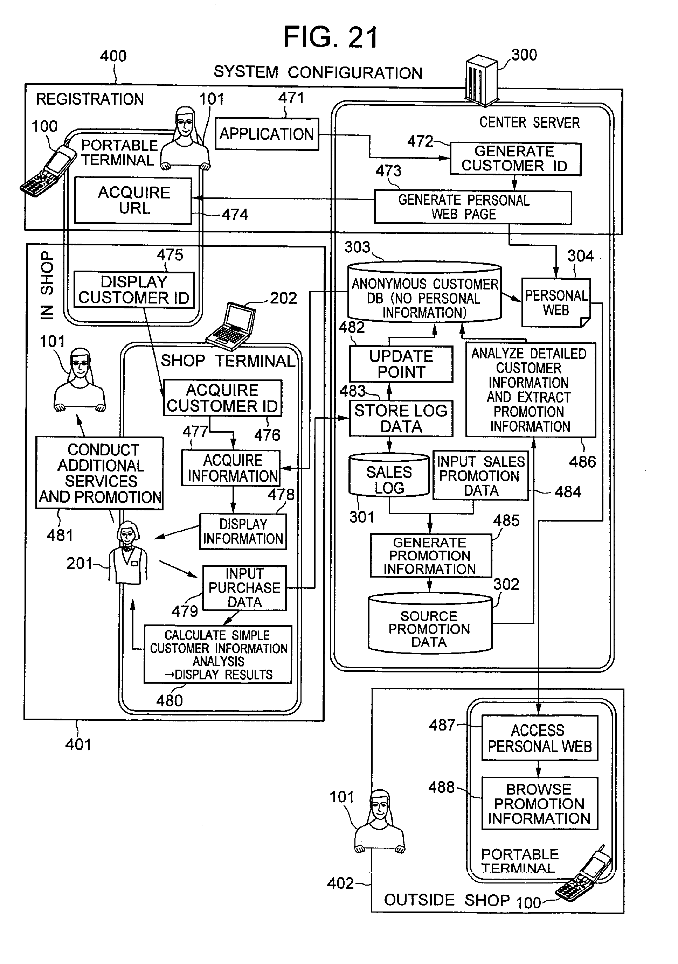

Next, with reference to Figs. 21 to 25, description will be made on a system of the fourth embodiment realized by the present invention. In the fourth embodiment, a dedicated point management program does not need to be installed in a portable terminal.

Fig. 21 is a diagram showing the configuration of the system of the fourth embodiment realized by the present invention. When a member participates (400) and an application (471) from the customer reaches the center server 300, the server issues a customer ID unique to each portable terminal (472) and generates a personal Web page (or only its URL) for an access by the portable terminal, and transmits the customer ID and the URL of the Web page to the portable terminal (473). The customer portable terminal acquires and stores URL (474). Also in this system, the customer ID is essential and the server is provided with an anonymous customer database 303. It is not necessary to store information that can be used for identifying an individual customer such as names and mail addresses, in the anonymous customer database.

When a customer 101 enters a shop (401), the customer presents the customer ID by displaying it on the display unit of the portable terminal and shows it to a clerk 201 or by other methods (475). The shop terminal 202 refers to the anonymous customer database 303 of the server 300 by using as a key the customer ID acquired at (476), and acquires the latest point value, purchase histories, customer information analysis results and the like (477) and displays them (478). As the clerk inputs present purchase data (479), a simple customer information analysis is executed, and the results are displayed (480). In this case, if the latest analysis results can be acquired immediately, the latest analysis results may be acquired from the server instead of executing analysis calculation in the shop terminal. In accordance with the displayed information, the clerk can conduct additional services and promotion (481). The input purchase data is transmitted to and stored in the server (483) and the point value is renewed (482).

In the center server 300, the stored sales log 301 and the history data and the like stored in the anonymous customer database are analyzed to grasp a sales tendency of all customers as a group. In accordance with the sales tendency, sales promotion data such as sale information is input when necessary (484) to generate source promotion data with conditions 302 (485). The promotion information matching the customer is extracted from the source promotion data at a proper timing in accordance with the sales tendency of the customers, and stored in the anonymous database 303 as a link to each pattern of the promotion information.

When the customer 101 does not come to the shop (402) and accesses the personal Web page in he server 300 from the portable terminal 100 (487), the promotion information extracted for the customer can be browsed (488).

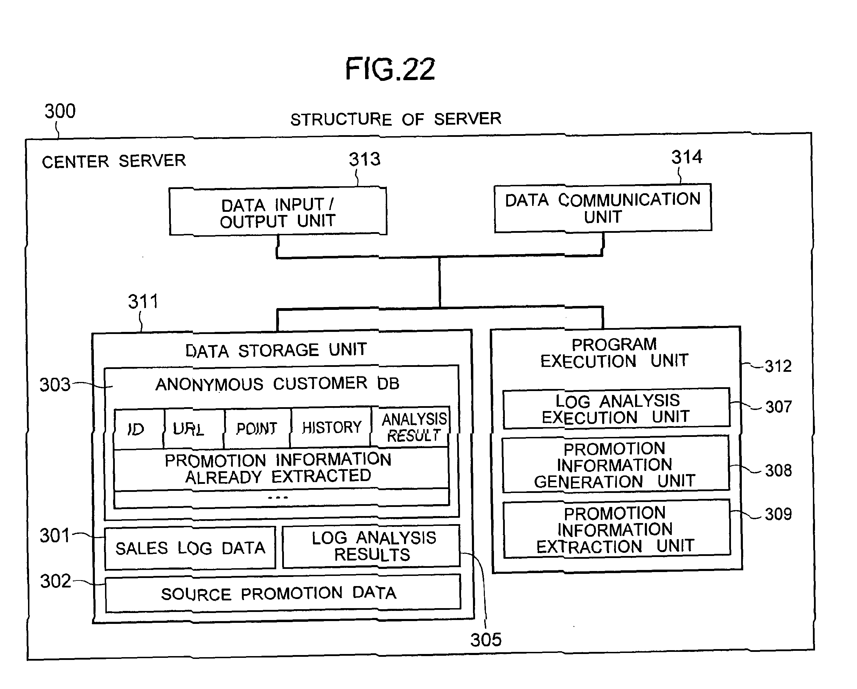

Fig. 22 is a diagram showing the structure of the center server 300 of the fourth embodiment of the system realized by the present invention. The center server 300 has a data input/output unit 313, a data communication unit 314, a data storage unit 311 and a program execution unit 312. The data storage unit stores an anonymous customer database 303, sales log data 301, log analysis results 305, source promotion data 302 and the like. Although the anonymous customer database stores the customer ID, point value, history data, customer information analysis results, it does not store information that can be used for identifying the individual customer such as the name and mail address. The program execution unit includes a log analysis execution part 307, a promotion information generation part 308 and a promotion information extraction part 309.

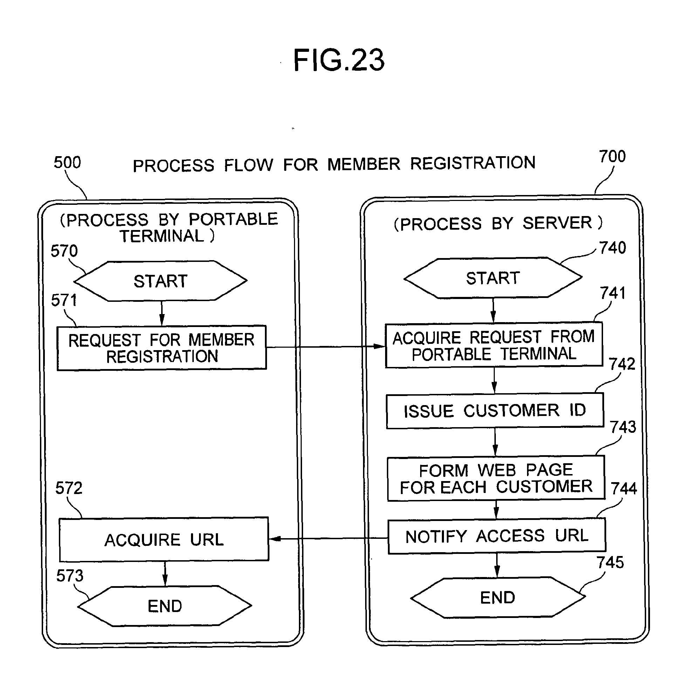

Fig. 23 illustrates the process flow to be executed when a member registers for the system of the fourth embodiment realized by the present invention. When a member registration request is issued from the portable terminal 100 (570), the server 300 acquires the request (741), issues the customer ID unique to each terminal (742), and generates a Web page (or only its URL) for the customer (743). The server notifies the portable terminal of URL for access and the customer ID (744), and the portable terminal acquires the URL and customer ID and stores them in the portable terminal (572).

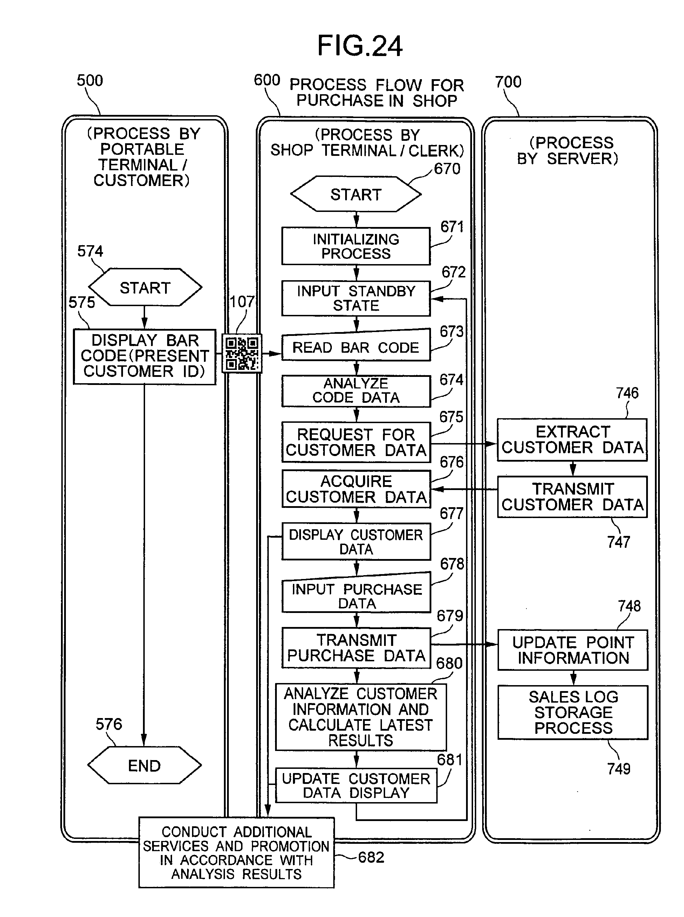

Fig. 24 illustrates the process flow to be executed for purchase in a shop in the system of the fourth embodiment realized by the present invention. At the shop, the customer presents the customer ID to a clerk, for example, in the form of a bar code displayed on the portable terminal (575). The shop terminal reads the bar code (673), analyzes the code data to acquire the customer ID (674). The bar code is displayed on the customer Web page (e.g., an image of the bar code is displayed on the customer Web page). Instead of the bar code, any other form may be used. The shop terminal requests the server for the reception of customer data by using the customer ID as a key (675), and the server extracts the necessary customer data from the anonymous customer database 303 (746) and transmits it to the shop terminal (747). The shop terminal receives the customer information (676) and displays it on the screen (677). As the clerk inputs purchase data (678), the purchase data is sent to the server (679) whereat the point information is renewed (748) and the sales log is stored (749). Simple customer information analysis calculation is executed in the shop terminal (680) and the obtained results are displayed (681), or the latest analysis results are acquired through communications with the server. The clerk can conduct additional services and promotion in accordance with the displayed contents (682).

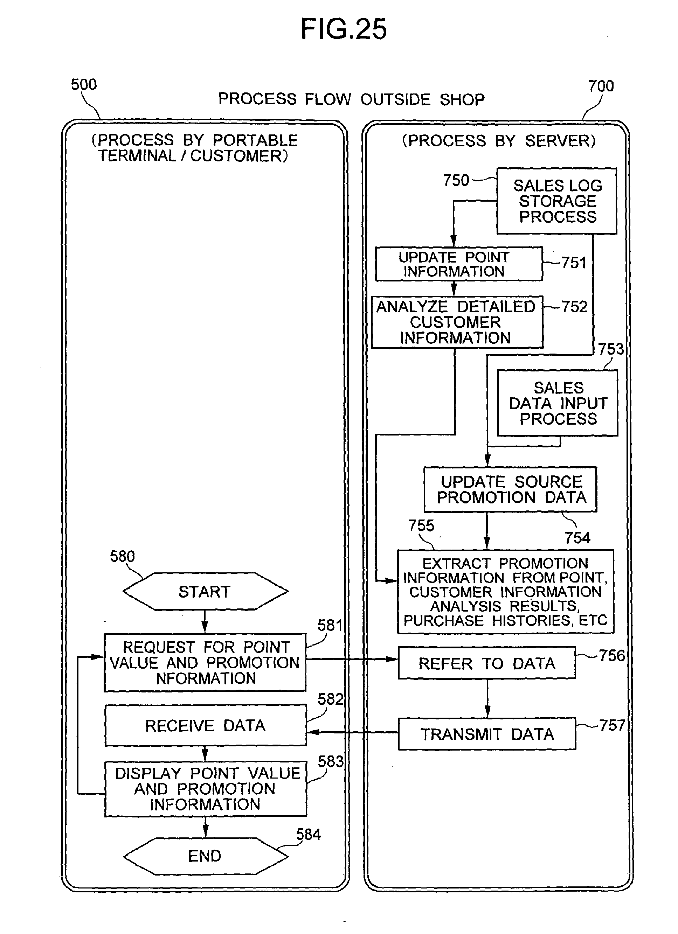

Fig. 25 illustrates the process flow to be executed outside a shop in the system of the fourth embodiment realized by the present invention. The server 300 stores a sales log sent from the shop terminal 200 (750), and renews the point information in the anonymous customer database 303 (751). As the sales promotion data such as sale information is input when necessary (753), the source promotion data 302 is updated (754). The promotion information is extracted by using the customer point value, customer information analysis results, purchase histories and the like, to update the contents of the anonymous customer database (755). When the customer accesses the Web page notified upon member registration from the portable terminal and requests for the point value and promotion information (581), the server refers to the corresponding information (756) and transmits the promotion information extracted beforehand (757). The portable terminal displays the results received at (582) (583) so that the customer can browse the latest promotion information.

The fourth embodiment of the system realized by the present invention has been described above. According to this system, the portable terminal only accesses a particular URL and the dedicated program does not need to be installed in the portable terminal. Therefore, the range of types of usable portable terminals is broadened. Although the server manages the purchase histories and the like of each customer, it is not necessary to disclose information that can be used for identifying an individual customer, and the customer can use the system without anxiety. The company side can avoid the risk of leakage from holding customer personal information. Also in this system, it is possible to conduct the promotion in the shop and the one-to-one promotion outside the shop.

### 5. Screen Display

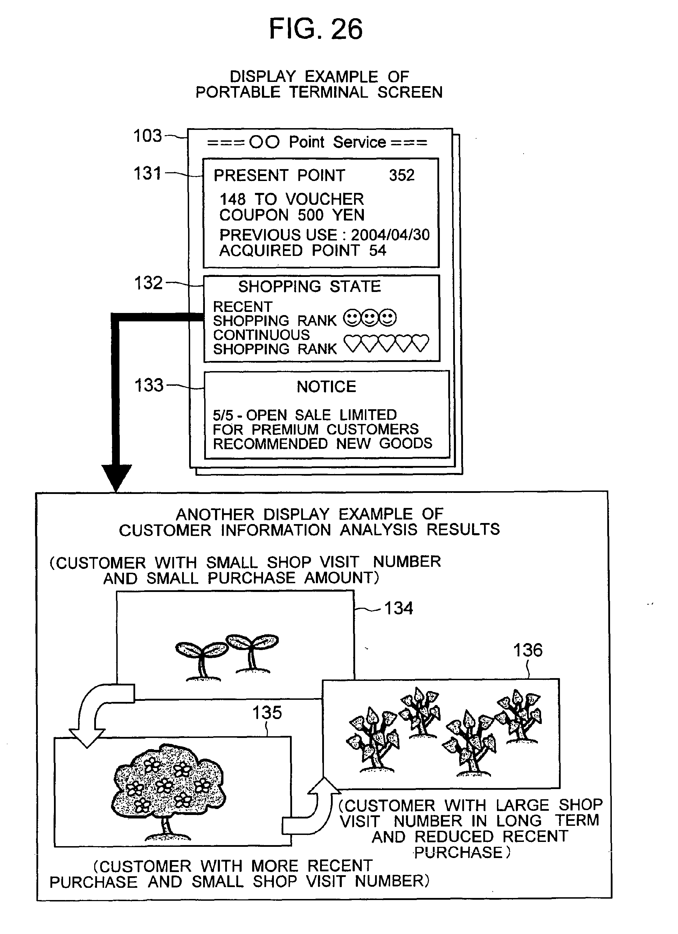

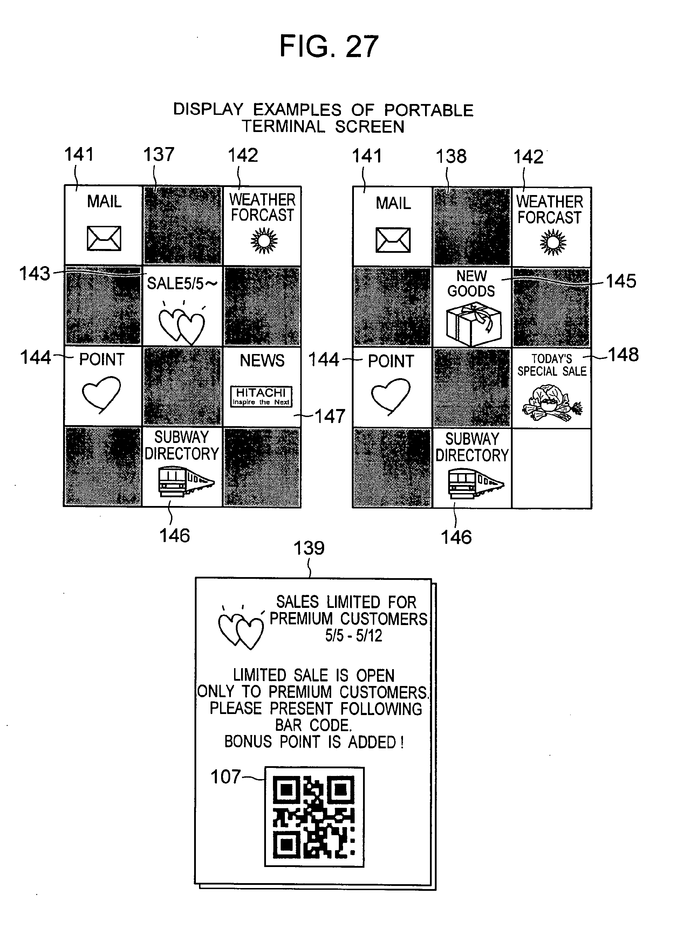

Next, with reference to Figs. 26 and 27, description will be made on display examples of the screen of a portable terminal. Each system of the present invention is characterized in that it is not necessary to disclose information for accessing a customer from the shop, such as the mail address and residential address. Although this makes customers feel secure, there arises the problem that voluntary execution of the point management program by customers and access to the Web are necessary in order for the shop to approach customers. Some devices for making customers activate the point management program are necessary by devising the display on a portable terminal and additional value.

Fig. 26 shows a display example of a portable terminal screen allowing the customer to confirm the present history information in the system realized by the present invention. A display screen 103 is constituted of a display area 131 for displaying point information of the customer, a display area 132 for displaying customer information analysis results, a display area 133 for displaying promotion information and the other display area. The current point value of the customer is displayed in the point information display area 131. In this display area, the number of points to the next target (in this example of the screen, "Voucher 500 Yen"), the time and date of the previous shopping, and other information may be displayed if necessary. Symbols representative of the shopping rank obtained through analysis results are displayed in the customer information analysis result display area 132. Reference numerals 134, 135 and 136 indicate other display examples in the customer information analysis result display area 132.

Assuming that the customer information analysis shows, for example, a rank corresponding to the purchase amount during the week, a rank corresponding to the number of shop visits during the year, and the like, a rank of recent purchase amount may be represented using a tree figure (from a bud to large tree in full bloom) and a rank of the number of shop visits in a long term may be represented by the number of trees. The display screen 134 is presented to the customer with both a small number of shop visits and a small amount of purchase, the display screen 135 is presented to the customer with a large amount of recently purchase and a small number of recent shop visits, and the display screen 136 is presented to the customer with a large number of shop visits in the long term and a reduced amount of recent purchase. The customer rank can therefore be confirmed visually. In addition to this method, the growth degree or look of a character may be changed with the customer rank, to spur the customer to the next shop visit. The history information stored in the portable terminal or server in each embodiment is used as the customer history information necessary for displaying the screens described above.

Promotion information suitable for the current situation of the customer extracted from the source promotion data in accordance with the customer information analysis results, is displayed in the promotion information display area 133. The example in Fig. 26 displays an invitation "Sale for premium customers only" presented only to those customers having a high customer rank and an invitation "Recommended new goods" presented only to those customers who purchased particular goods. Different display screens are presented to those customers having different conditions.

Fig. 27 shows other display examples of the screen of a portable terminal in the system realized by the present invention. In these examples, the point management program of the portable terminal provides links to other functions such as a mail and weather, and the screen can be used, for example, as a standby screen of a mobile phone. A screen 137 is displayed on the portable terminal of one customer, and a screen 138 is displayed on the portable terminal of another customer. Different icons are used respectively for a mail 141, weather forecast 142, a point 144 and a subway directory 146. As the point icon 144 is selected, the present point value can be confirmed. In the screen 137, the invitation 143 "Sale for premium customers only" is displayed, and in the screen 138, the invitation 145 "New goods" for customers who purchased particular goods is displayed. For other customers, other icons are displayed in the screens, such as news 147 and today's specials 148. As the sale invitation icon 143 is selected, the detailed information such as the information displayed in the screen 139 is displayed, or the bar code 107 usable as a voucher may be displayed. An invitation to the shop may be displayed for the customers with the lowered rank of the number of shop visits, or an invitation to achieving the target may be displayed for the customers whose rank can be raised with a small amount of shopping.

With the above-described screens, the customer can refer to the present point value and the promotion information from the shop by using the portable terminal even outside the shop. Such information changes from time to time according to the shopping state of a customer. Therefore, motivation for shopping by a customer can be improved. The relation between customers and shops can be improved by devising in such a manner that customers enjoy activating the point management program in combination with the link to other functions.

The categories of the present invention include the following matters.
(1) A management program for providing a customer with promotion information, the management program being stored in a portable terminal of the customer having a storage unit, a program execution unit, a communication unit and a display unit and executing steps of:
   storing history information in said storage unit, said history information including purchase data input to said portable terminal;
   making said program execution unit generate a promotion information request corresponding to source promotion data stored in advance in said storage unit, in accordance with said stored history information;
   making said communication unit transmit said promotion information request to a server and receive promotion information transmitted from said server in response to said promotion information request; and
   displaying said received promotion information on said display unit.
(2) A management program according to (1), wherein the management program is downloaded from an external apparatus in response to a request from said portable terminal.
(3) A management program according to (1), wherein the history information is updated by inputting the purchase data output from a shop terminal in accordance with purchase of said customer.
(4) A management program according to (1), wherein the history information is downloaded from said history information stored in said server in accordance with purchase of said customer, in response to a request from said portable terminal.
(5) A management program according to (1), wherein a notice of personal information of said customer to an external apparatus is not requested when said management program is stored and said promotion information request is responded.
(6) A promotion information providing method for providing promotion information to a portable terminal of a customer, wherein a server capable of communicating with said portable terminal:
   stores customer history information corresponding to ID information of said customer issued in a promotion information providing system, and source promotion data containing promotion information of a plurality of patterns;
   generates an individual Web page for each customer;
   extracts promotion information matching said customer from said source promotion data in accordance with said stored history information of said customer and relates said extracted promotion information to said individual Web page; and
   in response to a reception of an access request including the customer ID information from said portable terminal, presents said individual Web page corresponding to the customer ID information and said related promotion information.
(7) The promotion information providing method according to (6), wherein said history information of said customer is updated by receiving said customer ID information and purchase data presented to a shop terminal in accordance with purchase of said customer, from said shop terminal.
(8) The promotion information providing method according to (6), wherein said customer ID information is issued in response to a request from said portable terminal during member registration and downloaded to said portable terminal.
(9) The promotion information providing method according to (8), wherein a notice of personal information of said customer from said personal terminal is not requested when said customer ID information is issued and said portable terminal issues an access request.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A storage medium for storing a management program for providing a customer with promotion information, the management program executing, in a portable terminal (100) of the customer having a storage unit (106), a program execution unit (120) and a display unit (103), steps of:
storing history information in said storage unit, said history information including purchase data input to said portable terminal;
making said program execution unit extract promotion information from source promotion data stored in advance in said storage unit, in accordance with said stored history information; and
displaying said extracted promotion information on said display unit.

2. The storage medium according to claim 1, wherein the management program and said source promotion data are downloaded from an external apparatus in response to a request from said portable terminal.

3. The storage medium according to claim 1, wherein said source promotion data contains the promotion information of a plurality of patterns and said program execution unit analyzes customer information in accordance with said history information and extracts the promotion information corresponding to said analysis results.

4. The storage medium according to claim 1, wherein a notice of personal information of said customer to an external apparatus is not requested when said management program and said source promotion data are stored.

5. A promotion information providing method for providing promotion information to a portable terminal (100) of a customer, wherein a server (300) capable of communicating with said portable terminal:
stores source promotion data containing promotion information of a plurality of patterns;
is accessed by said portable terminal and receives a promotion information request, the promotion information reflecting history information of said customer;
selects promotion information suitable for said portable terminal from said source promotion data in accordance with said received promotion information request, the promotion information reflecting said history information; and
transmits said selected promotion information to said portable terminal.

6. The promotion information providing method according to claim 5, wherein said history information of said customer is stored in said portable terminal, and said promotion information reflecting said history information contains extraction conditions for the promotion information set in accordance with said stored history information.

7. The promotion information providing method according to claim 6, wherein storing said history information in said portable terminal and setting said extraction conditions for the promotion information are executed by a management program downloaded in response to a request from said portable terminal.

8. The promotion information providing method according to claim 7, wherein a notice of personal information of said customer from said portable terminal is not requested when download of said management program and said promotion information are requested.
